(19) Europäisches Patentamt
European Patent Office
Office européen des brevets

(11) Numéro de publication : **0 511 900 A1**

# (12) DEMANDE DE BREVET EUROPEEN

(21) Numéro de dépôt : **92401141.4**

(22) Date de dépôt : **22.04.92**

(51) Int. Cl.$^5$ : **B01D 71/72**, B01D 69/10, B01D 69/12, C08G 79/02

(30) Priorité : **30.04.91 FR 9105301**

(43) Date de publication de la demande : **04.11.92 Bulletin 92/45**

(84) Etats contractants désignés : **AT BE CH DE DK ES FR GB GR IT LI LU NL PT SE**

(71) Demandeur : **TECH-SEP**
**25 quai Paul Doumer**
**F-92408 Courbevoie Cédex (FR)**

(72) Inventeur : **Boye, Anne**
**14, rue Félix Pyat**
**F-11100 Narbonne (FR)**
Inventeur : **Grangeon, André**
**14, avenue Anatole France**
**F-84600 Valreas (FR)**
Inventeur : **Guizard, Christian**
**rue des Remparts, Puechaban**
**F-34150 Gignac (FR)**

(74) Mandataire : **Seugnet, Jean Louis et al**
**RHONE-POULENC CHIMIE Direction de la Propriété Industrielle 25, Quai Paul Doumer**
**F-92408 Courbevoie Cedex (FR)**

## (54) Membrane composite de nanofiltration.

(57) La présente invention concerne une membrane (3) de nanofiltration comportant un support poreux inorganique et une membrane microporeuse polymère, caractérisée en ce que :

— le support poreux inorganique présente un diamètre de pores compris entre 3 et 10 nm.

— la membrane microporeuse polymère est formée d'un dépôt dense d'un polyphosphazène élastomère réalisé sur au moins l'une des faces du support poreux et dont la porosité structurale est comprise entre 0,2 et 2 nm.

Utilisation de cette membrane pour la séparation de molécules de masse moléculaire comprise entre 100 et 1000.

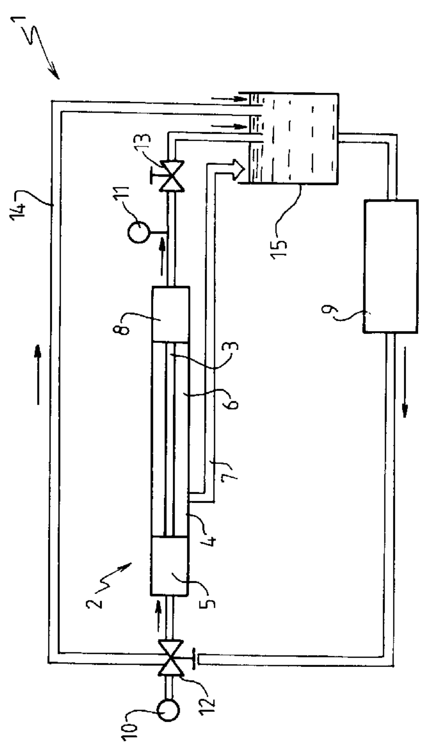


FIG.1

EP 0 511 900 A1

La présente invention concerne une membrane composite de nanofiltration, son procédé de préparation et son utilisation dans la séparation des composés moléculaires de faible masse.

La nanofiltration est une technique de séparation située à la frontière entre l'osmose inverse et l'ultrafiltration.

L'osmose inverse utilise une membrane généralement organique ou parfois minérale dont le transfert de matière est basée sur la diffusion. Le fluide à traiter diffuse à travers la membrane. Le seuil de coupure de la membrane est généralement inférieur à 100 daltons.

L'ultrafiltration utilise également une membrane organique ou minérale dont la taille des pores est comprise généralement entre 5 et 100 nm. L'effluent liquide passe à travers les pores de la membrane suivant un flux convectif. Le seuil de coupure de la membrane est supérieur généralement à 1000 daltons.

Par membrane de nanofiltration, on entend selon l'invention une membrane présentant un seuil de coupure compris entre environ 100 et 1000 daltons.

Avec de telles membranes la rétention est faible pour les sels (anion monovalent) et les molécules organiques non ionisées de masse moléculaire inférieure à 100 ; elle est importante pour les molécules organiques de masse moléculaire supérieure à 300 ainsi que pour les sels multivalents, ce qui, dans ce dernier cas, n'est pas souhaité dans ce type de séparation.

Pour une telle membrane dite membrane de nanofiltration, le seuil de coupure correspond à une taille de molécule de l'ordre du nanomètre et désigne donc le domaine de séparation situé entre l'osmose inverse et l'ultrafiltration.

Il a déjà été décrit dans la littérature des membranes organiques, éventuellement composites, de nanofiltration. Elles présentent cependant les inconvénients d'être mécaniquement et thermiquement fragiles et sensibles aux attaques chimiques.

Les membranes inorganiques en particulier tubulaires, présentent une grande résistance chimique, mécanique et thermique, ce qui est une des causes principales de leur développement actuel dans le domaine de l'ultrafiltration. Toutefois à la connaissance de la demanderesse, il n'existe pas de membranes de ce type, totalement inorganiques, permettant d'effectuer des opérations de nanofiltration.

Il a déjà été proposé par EP 250.327 une membrane pouvant être une membrane d'hyperfiltration comportant un support poreux en matériau inorganique et une membrane microporeuse en polymère organique.

La membrane microporeuse polymère est une membrane asymétrique et cloisonnée c'est-à-dire alvéolaire et déposée à l'intérieur des pores de la membrane inorganique par un procédé de préparation par inversion de phase comprenant une étape de coagulation du polymère et d'un traitement thermique final.

De façon à obtenir une membrane asymétrique et cloisonnée, les pores de la membrane inorganique macroporeuse ont un rayon moyen de pores important compris entre 0,5 et 1 μm d'après les exemples ; ce qui correspond à une membrane de microfiltration.

En outre, les épaisseurs de polymère indiquées dans le brevet (25 à 200 μm) sont incompatibles avec un procédé de nanofiltration.

L'inconvénient principal de ces membranes composites est la structure cloisonnée alvéolaire de la membrane organique qui lui confère une certaine fragilité notamment sous l'effet de fortes pressions compte tenu du diamètre de pore important du support minéral utilisé.

C. GUIZARD et al. Proc; FICIM' 89 - Montpellier, France, 3-6 juillet 1989, p. 75-85 (1990) indique la possiblité d'utiliser des polymères inorganiques entre autres des polyphosphazènes pour réaliser des membranes d'hyper- ou de nanofiltration sur membrane poreuse inorganique. Toutefois cette publication n'indique pas le diamètre des pores du substrat minéral et n'aboutit pas au résultat souhaité puisque la rétention en saccharose indiquée à la page 83 ne dépasse pas 50 %. Par ailleurs, cette publication n'indique pas la méthode de dépôt du polyphosphazène.

EP-A 302 928 décrit une membrane inorganique d'ultrafiltration recouverte d'un polymère organique hydrophile, convenant plus particulièrement pour la séparation des protéines. Cette membrane ne permet d'effectuer que des opérations d'ultrafiltration.

- Un but de la présente invention est de proposer une membrane de nanofiltration dont le diamètre moyen des pores est de l'ordre du nanomètre (nm) c'est-à-dire compris entre 0,2 et 2 nm et formée d'un support inorganique poreux et d'une membrane polymère.
- Un autre but de la présente invention est de proposer une membrane du type ci-dessus permettant une rétention quasi totale de molécules organiques ayant une masse moléculaire comprise entre environ 100 et 1000 daltons.
- Un autre but de la présente invention est de proposer une membrane du type ci-dessus dont le seuil de coupure peut varier par simple variation de la pression appliquée au fluide à traiter.
- Un autre but de la présente invention est de proposer une membrane du type ci-dessus dont la membrane polymère est formée d'un revêtement dense et élastomère.

- Un autre but de la présente invention est de proposer une membrane du type ci-dessus dont le polymère constitutif de la membrane présente à la fois un caractère élastomère, une bonne résistance thermique, chimique, mécanique et aux fortes variations de pression.

- Un autre but de la présente invention est donc de proposer une membrane de nanofiltration ayant sensiblement les propriétés d'une membrane inorganique tout en présentant une couche membranaire polymère superficielle.

Ces buts et d'autres sont atteints par la présente invention qui concerne en effet une membrane de nanofiltration comportant un support poreux inorganique et une membrane microporeuse polymère, caractérisé en ce que :

- le support poreux inorganique présente un diamètre de pores compris entre 3 et 10 nm.
- la membrane microporeuse polymère est formée d'un dépôt dense d'un polyphosphazène élastomère réalisé, sur au moins l'une des faces du support poreux et dont la porosité structurale est compris entre 0,2 et 2 nm.

Les supports inorganiques poreux sont des produits bien connus et constituent par eux-mêmes des membranes.

Ils se présentent généralement mais non nécessairement, sous forme de tubes comprenant un support macroporeux généralement en métal ou en alliage métallique (par exemple en nickel ou en alliage de nickel), en acier inoxydable, en carbone, ou bien en un matériau céramique tel qu'un oxyde, un carbure, un nitrure ou un siliciure comme par exemple en alumine ou en carbure de silicium. Sur au moins l'une des deux faces du support poreux on dépose par des procédés appropriés au moins une couche membranaire minérale généralement constituée par au moins une couche d'un oxyde métallique d'un métal le plus souvent choisi parmi le beryllium, le magnésium, le calcium, l'aluminium, le titane, le strontium, l'yttrium, le lanthane, le zirconium, le hafnium, le thorium, le fer, le manganèse, le silicium et analogues. Les oxydes les plus couramment utilisés sont les oxydes de titane, d'aluminium et de zirconium associés à des supports macroporeux en carbone ou en alumine.

Le support poreux inorganique préféré selon l'invention est constitué d'un support tubulaire poreux en carbone ou en alumine revêtu d'au moins une couche membranaire constituée d'une couche de particules d'oxyde le plus souvent partiellement fritté choisi parmi un oxyde de titane, l'alumine et la zircone. Il est recommandé de déposer plusieurs couches d'oxyde de granulométrie de grains décroissante jusqu'à obtenir un support poreux inorganique présentant un diamètre de pores compris entre 3 et 10 nm de préférence entre 4 et 8 nm.

Des supports poreux inorganiques du type ci-dessus et des procédés utilisables pour les obtenir sont en particulier décrits dans les brevets US-A 3.413.219, US-A 3.449.245, US-A 3.537.988, EP-A 40282, EP-A 92840 et FR-A 2.150.390 cités comme références.

Le support poreux inorganique présente sur au moins l'une de ses faces une membrane microporeuse polymère formée d'une couche (revêtement) dense d'un polyphosphazène élastomère. Cette couche membranaire polymère présente une porosité structurale comprise entre 0,2 et 2 nm ; de préférence entre 0,8 et 1,5 nm.

Cette couche est dense c'est-à-dire qu'à la différence de la couche objet de EP-1 250.327, elle n'est pas alvéolaire. C'est donc une couche sensiblement isotrope et dont la porosité est d'origine structurale, de préférence voisine de 1 nm.

La couche polymère membranaire dense peut être imbriquée dans les pores du support poreux inorganique affleurant cette surface sans dépasser la surface du support poreux et/ou former une pellicule (film) continue de polymère masquant complètement la surface enduite du support poreux inorganique.

L'important est que cette couche ait la porosité structurale appropriée visée par l'invention.

L'épaisseur de polymère déposé sur le support inorganique poreux est comprise entre 0,1 et 10 de préférence entre 0,5 et 5 $\mu$m.

Par polyphosphazène élastomère on entend selon l'invention un matériau à base de séquence polymère sensiblement linéaire capable de revenir à sa structure initiale après avoir subi une contrainte mécanique (pression).

Le polymère utilisé pour former la couche membranaire polymère à caractère élastomère est de préférence choisi parmi les polyphosphazènes répondant à la formule générale :

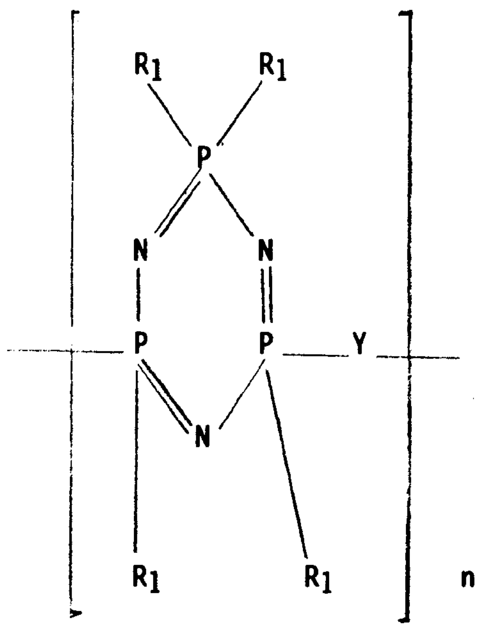

(1)

dans laquelle : - les radicaux $R_1$ identiques ou différents répondent à la formule :

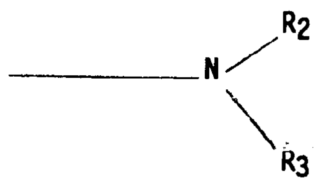

(2)

dans laquelle $R_2$ et $R_3$ identiques ou différents sont choisis parmi un radical hydrocarboné aliphatique linéaire ou ramifié éventuellement substitué par des atomes de fluor, ayant de 1 à 12 atomes de carbone, un radical cycloalkyle ayant de 3 à 8 atomes de carbone, un radical aryle, alkylaryle ou aralkyle ayant de 6 à 18 atomes de carbone dont la partie alkyle présente de 1 à 4 atomes de carbone et un hétérocycle ayant 3 à 20 atomes de carbone, l'hétéroatome étant choisi parmi O, S et N, $R_2$ et $R_3$ peuvent représenter en outre ensemble avec l'atome d'azote un hétérocycle ayant de 3 à 15 atomes de carbone et comporter également un autre hétéroatome choisi parmi O, S et N;

- les radicaux Y répondent à la formule :

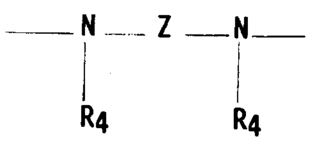

(3)

dans laquelle les radicaux $R_4$ identiques ou différents sont choisis parmi l'atome d'hydrogène ou un radical $R_2$ ou $R_3$ ; Z est un radical hydrocarboné divalent ayant de 1 à 20 atomes de carbone et pouvant comporter au moins un hétéroatome choisi parmi O, N et S, les 2 radicaux $R_4$ pris ensemble avec Z pouvant former un hétérocycle ayant de 3 à 15 atomes de carbone,

- n est un nombre entier compris entre 10 et 30000, de préférence entre 20 et 5000.

Comme exemples de radicaux $R_1$, on peut citer plus particulièrement les radicaux :

Diphénylamino $(C_6H_5)_2N$ -

N-naphtyl-2 N-propyl-amino 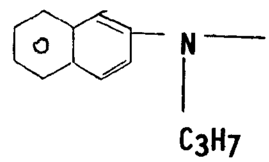

aziridino 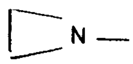

imidazolyle 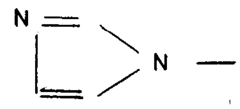

pyrollyle 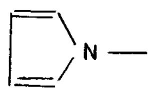

indolyle 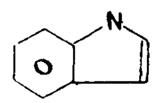

pyrrolinyle 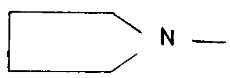

2-imidazolinyle 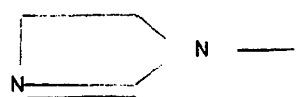

piperidinyle 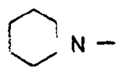

morpholino 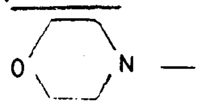

dibutylamino $(C_4H_9)_2N$ -

quinoléinyle 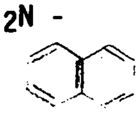

Comme exemples de radicaux Y on peut citer :

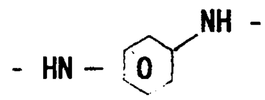

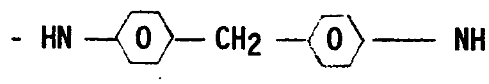

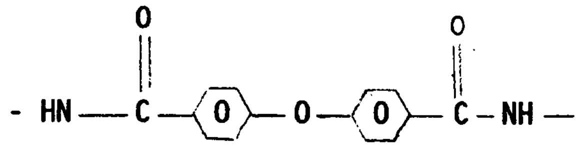

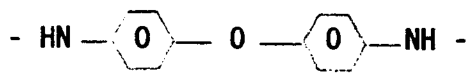

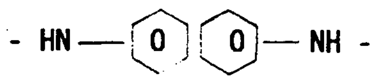

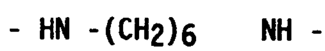

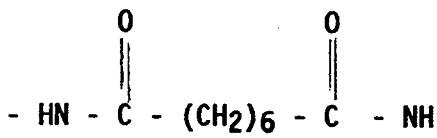

- HN - $(CH_2)_4$ - NH ,

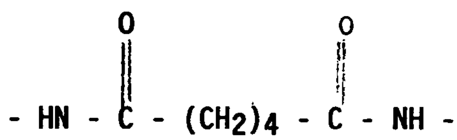

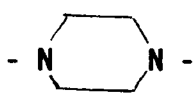

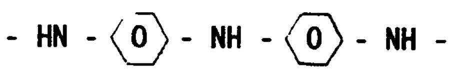

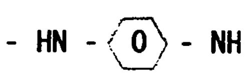

,

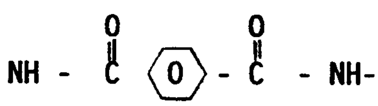

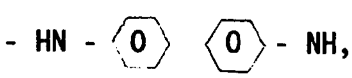

,

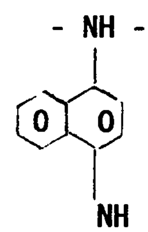

Les polyphosphazènes de formule (1) peuvent être préparés notamment à partir de l'hexachlorocyclotriphosphazène de formule :

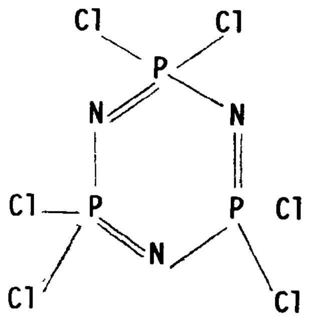

(4)

Suivant une première étape (a) on fait l'aminolyse partielle du produit de formule (4) au moyen d'une amine secondaire de formule :

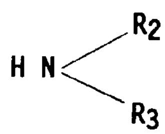

(5)

dans laquelle $R_2$ et $R_3$ ont la signification donnée ci-dessus.

Par l'emploi d'une amine secondaire de formule (5) on obtient le produit de formule (6) ci-dessous de préférence non géminé, c'est-à-dire que les 2 atomes de chlore restant ne se trouvent pas sur le même atome de phosphore, de formule :

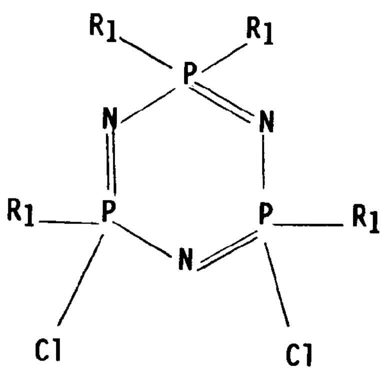

(6)

dans laquelle $R_1$ a la signification donnée ci-dessus.

La réaction d'aminolyse de l'étape (a) est de préférence effectuée en milieu solvant. Ce solvant peut être l'amine (5) utilisée en excès. On peut aussi utiliser comme solvant le chloroforme, les solvants hydrocarbonés (benzène, toluène, xylène), l'acétonitrile, les éthers (diéthyléther, tétrahydrofurane). Il est recommandé de maintenir anhydre le milieu réactionnel afin d'éviter l'hydrolyse des liaisons covalentes phosphore/chlore.

Par ailleurs si l'amine (5) est une base trop faible, il est souhaitable d'ajouter au milieu réactionnel un capteur d'acide tel que la triéthylamine ou la pyridine afin de précipiter du milieu réactionnel le sous-produit hydrochlorhydrate d'amine formé.

La température du milieu réactionnel a un effet sur le degré de substitution des chlores du produit de départ (1). Les hautes températures favorisent une substitution complète et inversement.

L'homme du métier par le choix des réactifs et des solvants est à même, par des expériences de routine, de définir les conditions opératoires permettant d'aboutir au produit désiré de formule (6) de préférence non géminé.

Sur le produit de formule (6) on polycondense une diamine de formule :

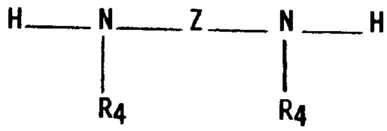

(7)

dans laquelle $R_4$ et Z ont la signification donnée ci-dessus, en présence d'un solvant jouant de préférence également le rôle d'accepteur d'acide chlorhydrique libéré, tel que la pyridine et la triéthylamine, et on obtient le polymère désiré de formule (1) que l'on purifie par une série de lavages puis on sèche. Des exemples de préparation de polyphosphagène cydolinéaires sont donnés dans le brevet US-A 4.749.489 cités comme référence.

L'invention a également pour objet un procédé de préparation d'une membrane de nanofiltration à partir d'un polyphosphazène élastomère.

Selon un premier mode de réalisation, on met en contact la couche séparatrice membranaire du support inorganique poreux avec une solution d'au moins un polyphosphazène élastomère pendant une durée suffisante pour adsorber le polymère sur et/ou dans la couche membranaire du suppport inorganique poreux.

Il est possible au préalable de saturer le support poreux en solvant du polymère pour faciliter son adsorption ultérieure. Comme solvant du polymère, on peut en particulier citer l'éthoxyéthanol, le méthanol et le chloroforme.

Après l'étape d'adsorption, il est possible d'éliminer le polymère non adsorbé par un rinçage avec ce même solvant.

La formation de la membrane polymère est complétée par un traitement thermique entre 80-150°C pendant environ 24 h.

Selon un autre mode de réalisation, on procède à partir d'un dion à base de polyphosphazène dont on a adapté le pouvoir solvatant, par exemple en utilisant un mélange éthoxyéthanol/eau (75 %/25 % en volume).

De façon générale, il est recommandé que la température d'ébullition du produit non solvant (l'eau) soit inférieure à la température d'ébullition du produit solvant (l'éthoxyéthanol) en vue d'éviter l'inversion de phase.

On sature la couche membranaire du support inorganique, par exemple par simple contact, puis après un éventuel rinçage, on complète la formation de la membrane par un traitement thermique à 80-150°C pendant environ 24 h.

Les membranes composites selon l'invention sont caractérisées par de bonnes propriétés de transfert et une résistance élevée à la température, aux variations de pression, aux solvants organiques et aux agents chimiques.

La partie inorganique des polyphosphazènes confèrent aux membranes composites une meilleure résistance mécanique, chimique et thermique. Par ailleurs le choix approprié des groupements organofonctionnels du polymère (dans le cas du polymère de formule (1), les radicaux $R_1$ et Y) permet de consolider ses propriétés et d'obtenir d'autres propriétés intéressantes lors de leur utilisation en nanofiltration, en particulier la propriété d'hydrophilie ou d'hydrophobie. Dans le cas de l'hydrophilie, il est recommandé de prévoir des radicaux hydrocarbonés $R_1$ présentant des noyaux benzéniques et/ou des hétérocycliques présentant des hétéroatomes choisis parmi O, N et S.

Dans le cas de l'hydrophobie, il est recommandé de prévoir des radicaux $R_1$ perfluoroalkyles.

Il est important de noter que les membranes composites selon l'invention cumulent les propriétés avantageuses des membranes organiques et des membranes céramiques sans en présenter les inconvénients.

En effet les membranes selon l'invention sont, comme les membranes organiques d'un coût abordable, aisées à mettre en forme et présentent une bonne résistance mécanique. Par contre, elles présentent une résistance à la température, à la pression, aux solvants et aux agents chimiques bien meilleure.

Par ailleurs, les membranes selon l'invention présentent comme les membranes céramiques une bonne résistance à la température, à la pression et aux agents chimiques. Par contre, elles sont d'un coût plus abordable, de mise en forme plus aisée et présentent une meilleure résistance mécanique.

Ainsi les membranes selon l'invention sont résistantes vis-à-vis des agents chimiques dans une gamme de pH comprise entre 1 et 13 sous des conditions de pression allant jusqu'à 30 bars et plus et à des températures pouvant atteindre 200°C environ.

Les membranes selon l'invention permettent la nanofiltration d'effluents organiques très difficiles à traiter par des membranes purement organiques sensibles notamment aux attaques de solvants et impossibles à traiter par des membranes minérales dont la taille des pores est insuffisante pour retenir des molécules inorganiques de petite taille.

En effet les membranes selon l'invention présentent une porosité structurale de l'ordre du nanomètre et permettent un excellent taux de rétention (très proche ou égal à 100 %) pour les molécules de masse moléculaire comprise entre 100 et 1000. Par ailleurs le seuil de coupure (cut off) compris généralement entre 100 et 1000 daltons de ces membranes peut être réglé par simple variation de pression (par exemple dans la game de 1 à 30 bars) exercée sur l'effluent à traiter au contact de la couche séparatrice de la membrane. Cette très intéressante propriété, qui permet de n'utiliser qu'une seule membrane pour séparer des molécules de masse moléculaire différente, est essentiellement due au caractère élastomère du polyphosphazène utilisé.

Ce caractère élastomère se rencontre nécessairement quand on utilise les polycyclophosphazènes de formule (1) plus spécifiquement visés par la présente invention. Toutefois l'homme du métier par des expériences de routine pourra détecter des polyphosphazènes à caractère élastomère par exemple dans les polyphosphazènes de formule :

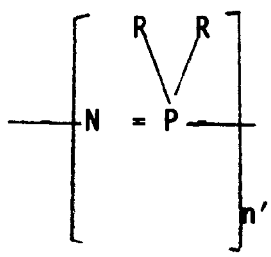

qui sont par exemple décrits dans la publication Patent US 6.868.478 du 10/11/1987, US-A 4.710.204, EP-A 335 775 et EP-A 312.435 cités comme référence.

La présente invention vise en outre un procédé de séparation par nanofiltration des molécules de masse moléculaire comprise entre 100 et 1000, caractérisé en ce qu'on utilise une membrane composite selon l'invention et on adapte le seuil de coupure de ladite membrane à la valeur souhaitée en faisant varier la pression de l'effluent à traiter au contact de ladite membrane.

D'autres avantages et caractéristiques de l'invention apparaîtront à la lecture des exemples suivants de réalisation donnés à titre illustratif nullement limitatif, référence sera faite au dessin annexé.

<u>**EXEMPLE 1**</u> : Préparation du polyphosphazène :

1. Synthèse du dichloro-tétramorpholino-cyclotriphosphazène (formule (6) avec

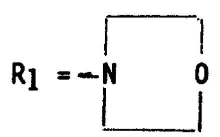 )

Dans un ballon de 1000 ml à 4 tubulures, équipé d'une agitation mécanique efficace, d'un thermomètre, d'une ampoule à brome et d'un réfrigérant, on introduit l'hexachlorocyclotriphosphazène $P_3N_3Cl_6$ (34.76 g ; 0,1 moles) et 150 ml de benzène anhydre. Lorsque la solubilisation est complète et la température du milieu est stabilisée à 16°C grâce à un bain eau/glace pilée, la morpholine anhydre (69 ml ; 0,8 moles) diluée dans 100 ml de benzène anhydre est additionnée par l'ampoule, lentement, goutte à goutte, pendant deux heures, sous forte agitation et à une température de réaction comprise entre 16 et 18°C.

Après 4 heures de réaction toujours dans les mêmes conditions, le mélange est laissé au repos durant 15 heures à température ambiante, puis il est porté à 35 °C durant 6 heures sous forte agitation. Le précipité de chlorhydrate de morpholinium obtenu est séparé par filtration. La solution benzénique est évaporé de moitié sous le vide d'une pompe primaire. Le précipité qui apparaît est filtré et le filtrat est de nouveau évaporé de moitié. Cette opération est à nouveau répétée. Les trois précipités sont recristallisés dans l'acétate d'éthyle jusqu'à l'obtention de deux isomères Trans et Cis, qui se distingue par leur point de fusion, soit respectivement 147-149°C et 161-163°C.

2) Synthèse du poly(p-oxydianiline-tétramorpholino-cyclotriphosphazène) :
formule 1 avec

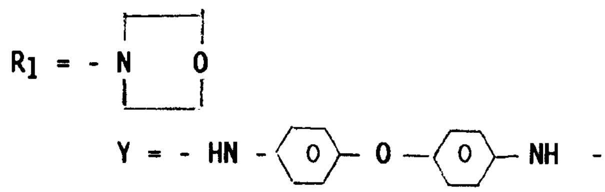

Dans un ballon de 1000 ml à 4 tubulures, équipé d'une agitation magnétique efficace, d'un thermomètre, d'une ampoule à brome, d'un réfrigérant, enveloppé de papier aluminium pour éviter l'exposition à la lumière, et sous balayage d'azote, on dissout le dichloro-tétramorpholinocyclotriphosphazène (7,89 g ; 0,0144 mole) dans 70 ml de pyridine. A dissolution complète, on porte la température du milieu à 100-105°C, puis on ajoute, goutte à goutte, la p-oxydianiline (3,6 g ; 0,018 mole, soit le nombre de moles assurant la stoechiométrie et un excès de 25 %) dissoute dans 80 ml de pyridine pendant 1 heure. Le mélange est porté à reflux de la pyridine, soit 115°C, pendant 18 heures. Enfin, on laisse revenir la température vers 40°C et une partie de la pyridine est évaporée sous vide d'une pompe primaire. On précipite le polymère solubilisé avec de l'eau distillée, le précipité obtenu est filtré sur verre fritté, abondamment lavé à l'eau distillée pour éliminer le chlorhydrate de pyridinium et la pyridine, et séché vers 85-100°C, sous vide. Le polymère est alors prêt à l'emploi.

**EXEMPLE 2** : Préparation de la membrane

Comme tube support, on part d'une membrane minérale composite de 15 cm de long, de diamètre interne 0,6 cm, de diamètre externe 1 cm comportant 2 couches superposées membranaires en zircone. Le diamètre moyen des pores de la dernière couche est de 5 nm.

Le polyphosphazène obtenu à l'exemple 1 est purifié par 3 lavages à l'eau puis séché. On prépare un collodion par dissolution de 0,35 g de polyphosphazène dans 5 cm3 d'un mélange de 75 % d'éthylcellosolve® et de 25 % d'eau.

La solution obtenue est transparente et placée à - 5°C pendant 20 minutes avec un tube-support, puis le dépôt est effectué à température ambiante en remplissant le tube support avec le collodion. Le tube ainsi rempli est laissé à -5°C durant 10 minutes puis il est vidé du collodion et subit un traitement thermique à 100°C pendant 24 h.

Les coupes franches des membranes ainsi obtenues sont étanchées à l'aide d'un vernis, afin d'éviter, lors de la filtration, le passage de la solution d'alimentation dans le perméat par ces coupes franches. Pour cela les extrémités des membranes sont trempées sur 1 cm environ dans un vernis, laissées 12 h à température ambiante, puis 1 h à 2 h de séchage à 80°C.

La membrane obtenue aura donc une forme tubulaire de 0,6 cm de diamètre interne et de 15 cm de longueur. La longueur active de la membrane est de 13,15 cm, et, par conséquent sa surface interne active est de $24,79.10^{-4}$m2.

L'épaisseur de la couche polymère est de 0,8 μm environ.

**EXEMPLE 3**

Dans cet exemple, on effectue des opérations de nanofiltration à l'aide d'une boucle de circulation représentée schématiquement à la figure 1 du dessin annexé. Cette boucle (1) comporte un module (2) de nanofiltration comportant la membrane (3) préparée à l'exemple 2 disposée à l'intérieur d'un carter (4) divisé en 3 compartiments, un compartiment (5) d'introduction de la solution à traiter, un compartiment (6) de récupération du perméat évacué par la conduite (7) et un compartiment (8) d'évacuation du rétentat.

Cette boucle comporte en outre une pompe (9) d'alimentation de la solution à traiter assurant à la fois le rôle de pompe d'alimentation appliquant la pression désirée et de pompe de recirculation permettant à la solution à traiter de tourner dans la boucle en circuit fermé. Cette boucle comporte en outre deux jauges de pression (10) et (11), deux vannes (12) et (13), une conduite de trop plein (14) débouchant dans le réservoir (15) contenant la solution à traiter. Les vannes (12) et (13) associées aux jauges (10) et (11) permettent de régler la pression.

La boucle comporte en outre un échangeur de chaleur (non représenté) stabilisant la température de la solution et un thermomètre (non représenté) mesurant la température de la solution.

Cette boucle fonctionne selon un procédé continu en circuit fermé. La solution à traiter est envoyée dans

le module puis revient dans le réservoir ainsi que le perméat (à l'exception des échantillons nécessaires à l'analyse) afin de conserver la concentration de la solution à traiter constante. On calcule la densité de flux de perméat en mesurant la quantité de perméat recueilli en un temps donné et en divisant par la surface effective de la membrane.

Quatre types de solutions notées (a), (b), (c) et (d) à traiter sont utilisées :

- (a) une eau potable,
- (b) la même eau contenant en outre du chlorure de sodium (masse moléculaire 58 g - diamètre $\phi$ de $Na^+$ 0,194 nm diamètre $\phi$ $Cl^-$ ; 0,362 nm) à une concentration 0,1 M.
- (c) la même eau de ville solubilisant du "Yellow Acid 42®" (masse moléculaire 759 g, $\phi$ = 1,4 nm) à environ 0,0013 M.
- (d) la même eau de ville solubilisant du saccharose (masse moléculaire 342 g, $\phi$ = 1,025 nm) à environ 0,1 M.

Les perméats obtenus sont caractérisés par 5 méthodes physiques adaptées à chaque type de soluté :

∗ La conductimétrie et la chromatographie échangeuse d'ions permettent d'accéder à la rétention saline (en chlorure et sulfate de sodium).

∗ La polarimétrie et la réfractométrie déterminent la rétention en saccharose, molécule ayant un pouvoir rotatoire optique.

∗ La spectrophotométrie d'absorption donne la rétention en Yellow Acid ®, molécule colorée et absorbant dans le visible et l'ultra-violet.

Exemple 3a : mesure de la perméabilité de l'eau Pe de ville (a) à pression constante (10 bars) en fonction de la température de l'eau.

On utilise la boucle de circulation décrite ci-dessus dont le réservoir (15) est rempli d'eau (a) ; on effectue une première série de mesure avec une membrane inorganique de l'exemple 2 non enduite de polymère (fig. 2) et une membrane de l'exemple 2 enduite de polymére (fig. 3); les résultats obtenus sont rassemblés sur les figures 2 et 3 ci-après représentant un graphe où sont portées en abscisse les températures θ (°C) et en ordonnée la perméabilité théorique et expérimentale obtenues en $l.h^{-1}.m^{-2}$ $bar^{-1}$.

Il ressort de la comparaison des perméabilités Pe des figures 2 et 3 que, à pression constante et à régime quasistationnaire, la résistance hydraulique de la membrane de l'exemple 2 est d'environ 10 fois plus élevée que celle du tube-support. Par ailleurs, une augmentation de la température entraîne une augmentation de la perméabilité de l'eau de 2,3 % et de 3,7 % par degré Celsius respectivement pour le support minéral et la membrane polymère. Cette différence est vraisemblablement la conséquence d'un régime de transfert d'une autre nature.

Exemple 3b :

Dans cet exemple on mesure la densité de flux F de perméat en litre par heure et par $m^2$ de membrane en fonction de la pression P (en bars) pour les 4 solutions (a), (b), (c) et (d). Les résultats obtenus sont rassemblés sur la figure 4 ci-après où les pressions P(bars) sont portées en abcisse et les densités de flux F (l/h.m2) sont portées en ordonnée. D'après la figure 4, on constate que plus la pression augmente plus le flux de perméat est important.

Exemple 3c :

On répète l'exemple 3b sauf que l'on mesure les variations du taux de rétention en fonction de la pression.

Les résultats obtenus sont rassemblés sur la figure 5 ci-après où l'on a représenté en ordonnée les taux de rétention T en %.

Sur la figure 5, on constate la parfaite rétention du Yellow Acid ® (solution (d)) dont le taux T de rétention est supérieur à 95 % à partir de 5 bars.

On voit par contre que la rétention du saccharose augmente avec la pression et deviendrait totale à 25 bars.

La rétention du chlorure de sodium est de 20 % à 20 bars.

**EXEMPLE 4** : Effet des solutions acide (e) et basique (f) sur la membrane et le flux de perméat.

On prépare une solution aqueuse d'acide nitrique (e) à pH = 1,66 et une solution aqueuse de soude (f) à pH = 12,3.

On compare le flux de perméat pour l'eau de ville (a) et pour la solution (d) de Yellow Acid® avant et après traitement acide (fig. 6) et après traitement basique (fig. 7).

Les résultats obtenus sont rassemblés dans les figures 6 et 7 où l'on a porté en abscisse le temps de circulation en nm et en ordonnée la densité de flux F de perméat en $l/h.m^2$. La pression est de 20 bars et la température des solutions est de 40°C. Lors du nettoyage acide/base de la membrane on constate, sur la fig. 6, que l'acide nitrique ne modifie pas le flux de perméat et ne permet pas de décolmater sans toutefois dégrader la membrane. En effet le flux de perméat à l'état quasi-stationnaire pour la solution d'acide nitrique est presque identique à celle du Yellow Acid. Sur la figure 7, on constate que la solution de soude ne modifie ni le flux de perméat, ni l'allure de la courbe pour l'eau de ville (a) et la solution de Yellow Acid (d). De plus, le flux de perméat à l'état quasi-stationnaire pour la solution de soude est quasi identique à celui observé pour l'eau pure. Par ailleurs on constate donc que la solution de soude ne dégrade pas la membrane polymère. Par conséquent, la soude élimine le colmatage sans dégrader la membrane.

## Revendications

1. Membrane de nanofiltration comportant un support poreux inorganique et une membrane microporeuse polymère, caractérisée en ce que :
   - le support poreux inorganique présente un diamètre de pores compris entre 3 et 10 nm.
   - la membrane microporeuse polymère est formée d'un dépôt dense d'un polyphosphazène élastomère réalisé sur au moins l'une des faces du support poreux et dont la porosité structurale est comprise entre 0,2 et 2 nm.

2. Membrane selon la revendication 1, caractérisée en ce que la couche polymère dense est imbriquée dans les pores du support poreux et/ou forme une pellicule continue et en ce que l'épaisseur de cette couche est comprise entre 0,1 et 10 μm.

3. Membrane selon la revendication 1 ou 2, caractérisée en ce que le polyphosphazène répond à la formule générale :

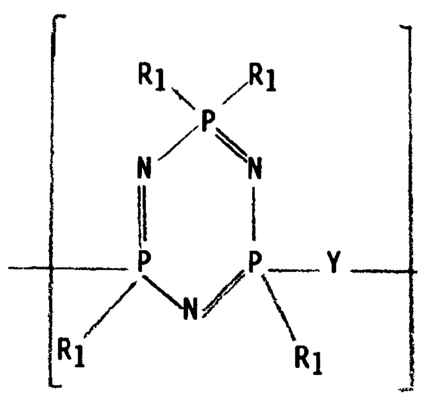

(1)

dans laquelle : - les radicaux $R_1$ identiques ou différents répondant à la formule :

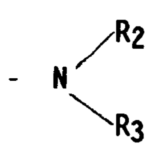

(2)

dans laquelle $R_2$ et $R_3$ identiques ou différents sont choisis parmi un radical hydrocarboné aliphatique linéaire ou ramifié ayant de 1 à 12 atomes de carbone, un radical cycloalkyle ayant de 3 à 8 atomes de carbone, un radical aryle, alkylaryle ou aralkyle ayant de 6 à 18 atomes de carbone dont la partie alkyle présente de 1 à 4 atomes de carbone et un hétérocycle ayant 3 à 20 atomes de carbone l'hétéroatome étant choisi parmi O, S et N, $R_2$ et $R_3$ peuvent représenter en outre ensemble avec l'atome d'azote un hétérocycle ayant de 3 à 15 atomes de carbone et comporter également un autre hétéroatome choisi parmi

O, S et N.

- les radicaux Y répondent à la formule :

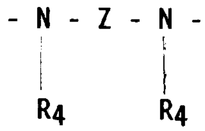 (3)

dans laquelle les radicaux $R_4$ identiques ou différents sont choisis parmi l'atome d'hydrogéne ou un radical $R_2$ ou $R_3$ ; Z est un radical hydrocarboné divalent ayant de 1 à 20 atomes de carbone et pouvant comporter au moins un hétéroatome choisi parmi 0, N et S, les deux radicaux $R_4$ pris ensemble avec Z pouvant former un hétérocycle ayant de 3 à 15 atomes de carbone,

- n est un nombre entier compris entre 10 et 30000, de préférence entre 20 et 5000.

4. Membrane selon l'une des revendications 1 à 3, caractérisée en ce que les radicaux $R_1$ sont choisis parmi

Diphénylamino $(C_6H_5)_2N$ -

N-naphtyl-2 N-propyl-amino 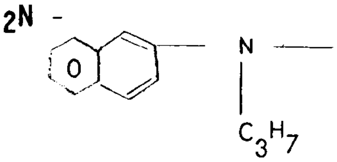

aziridino 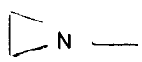

imidazolyle 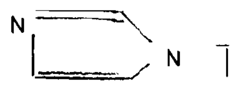

pyrollyle 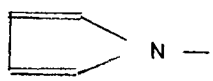

indolyle 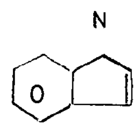

pyrrolinyle 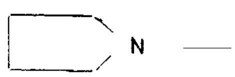

2-imidazolinyle 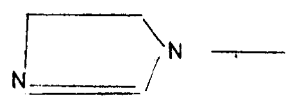

piperidinyle 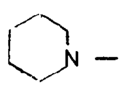

morpholino 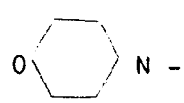

dibutylamino $(C_4H_9)_2N$ -

quinoléinyle 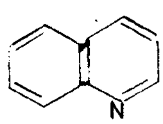

5. Membrane selon l'une des revendications 1 à 4, caractérisée en ce que les radicaux y sont choisis parmi :

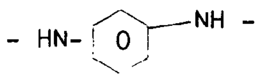

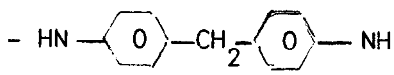

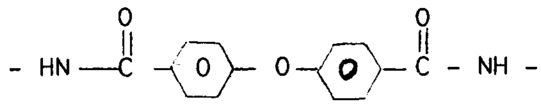

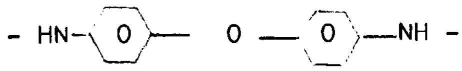

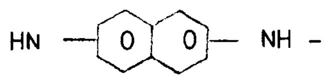

$- HN - (CH_2)_6 - NH -$

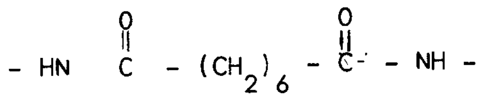

$- HN - (CH_2)_4 - NH -$ , 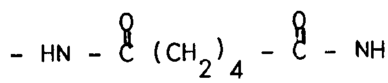

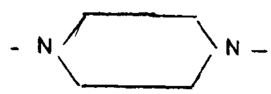

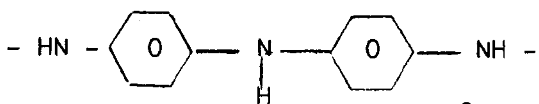

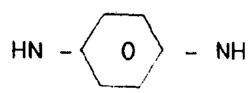 , 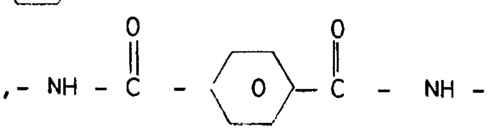

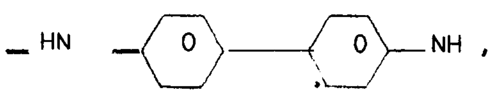 , 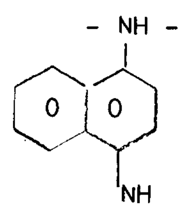

6. Membrane selon la revendication 3, 4 et 5, caractérisée en ce que le polymère de formule 1 présente :

un radical $R_1$ = 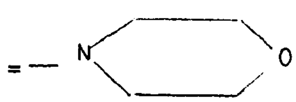

un radical Y = 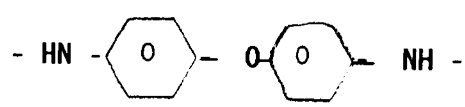

7. Membrane selon l'une quelconque des revendications 1 à 4, caractérisée en ce qu'elle présente un seuil

de coupure compris entre 100 et 1000 daltons.

**8.** Procédé de séparation par nanofiltration de molécules de masse moléculaire comprise entre 100 et 1000, caractérisé en ce qu'on utilise une membrane composite telle que définie à l'une quelconque des revendications 1 à 7 et on adapte le seuil de coupure de ladite membrane à la valeur souhaitée en faisant varier la pression de l'effluent à traiter au contact de ladite membrane.

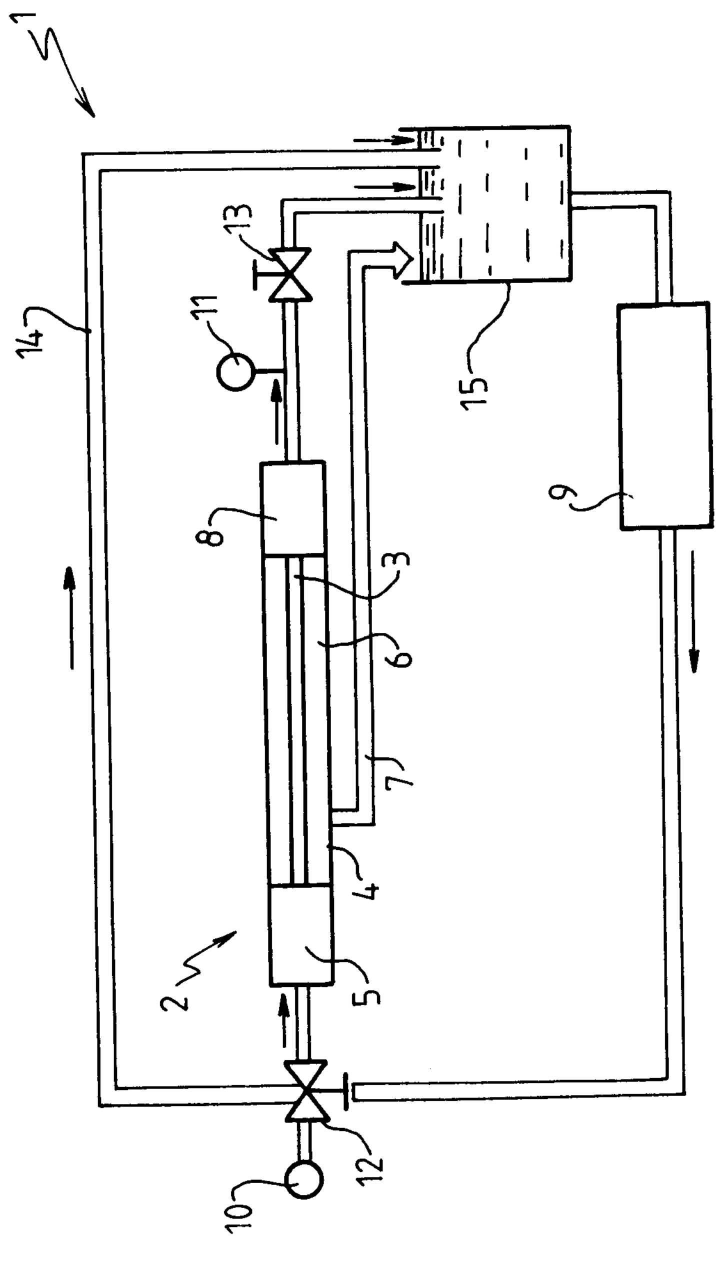


FIG.1

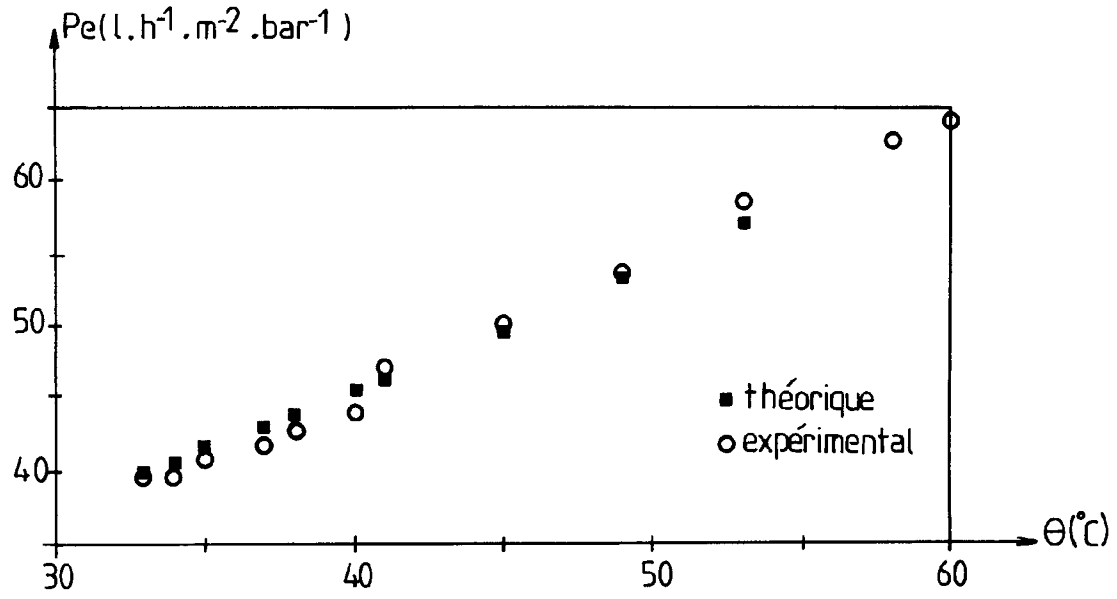
Pe( l.h-1.m-2.bar-1 )
60
50
40
30
40
50
60
θ(°C)
théorique
expérimental

FIG. 2

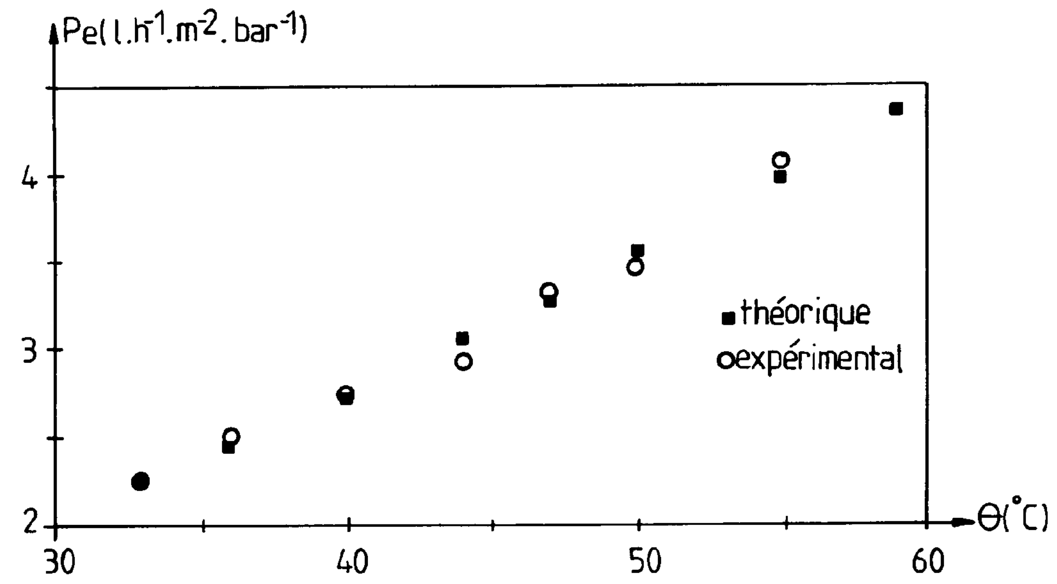
Pe( l.h-1.m-2.bar-1)
4
3
2
30
40
50
60
θ(°C)
théorique
expérimental

FIG. 3

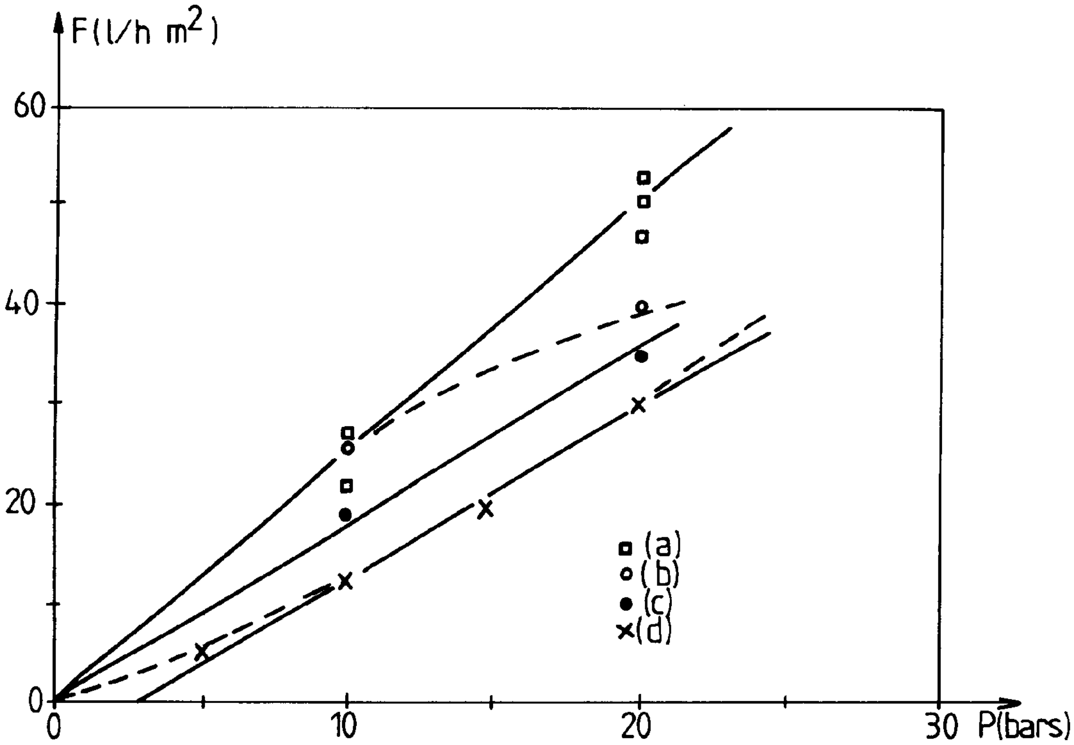
F(l/h m$^2$)
60
40
20
0
0
10
20
30
P(bars)
(a)
(b)
(c)
(d)

FIG. 4

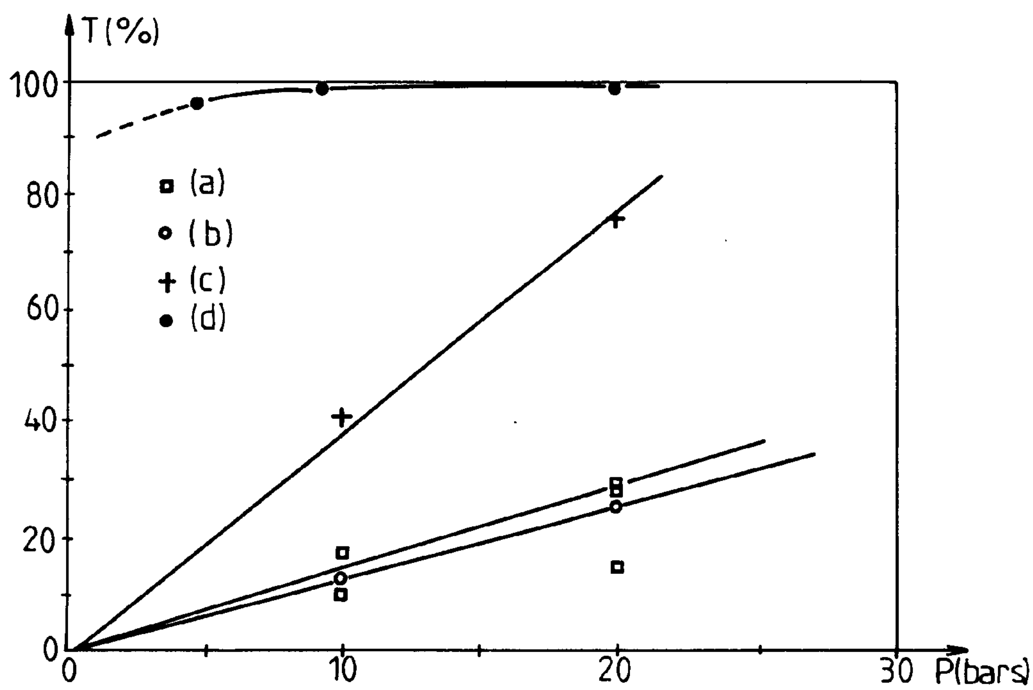
T(%)
100
80
60
40
20
0
0
10
20
30
P(bars)
(a)
(b)
(c)
(d)

FIG. 5

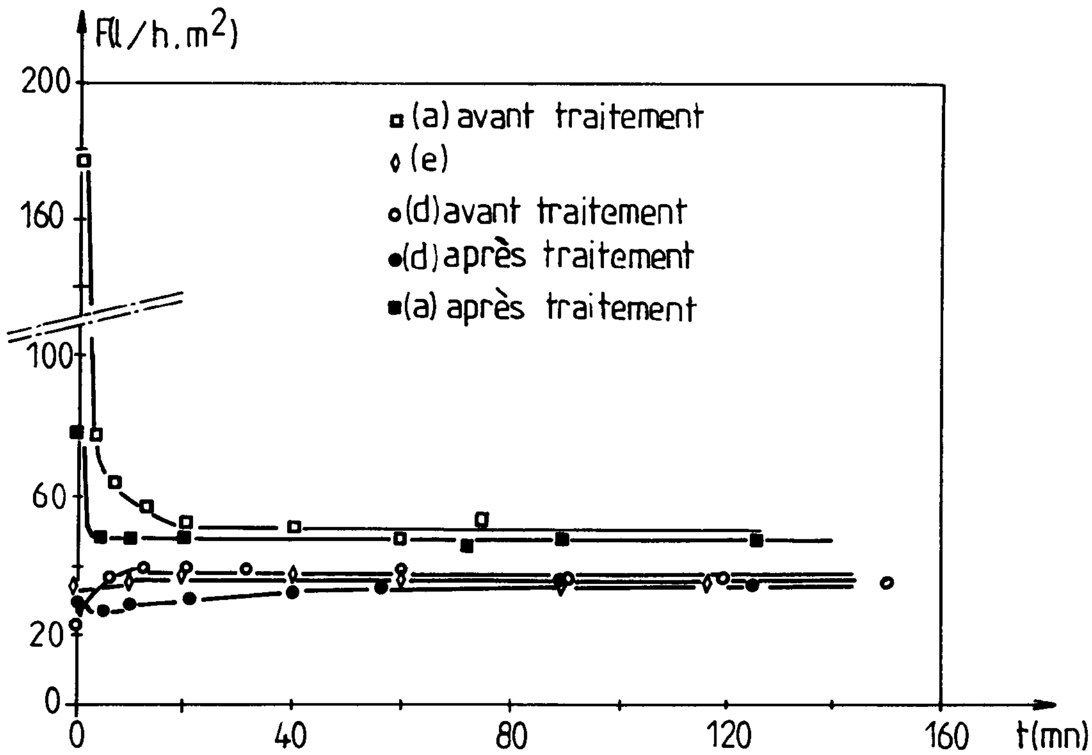
F(l/h.m2)
200
160
100
60
20
0
0
40
80
120
160
t(mn)
(a) avant traitement
(e)
(d)avant traitement
(d)après traitement
(a) après traitement

FIG. 6

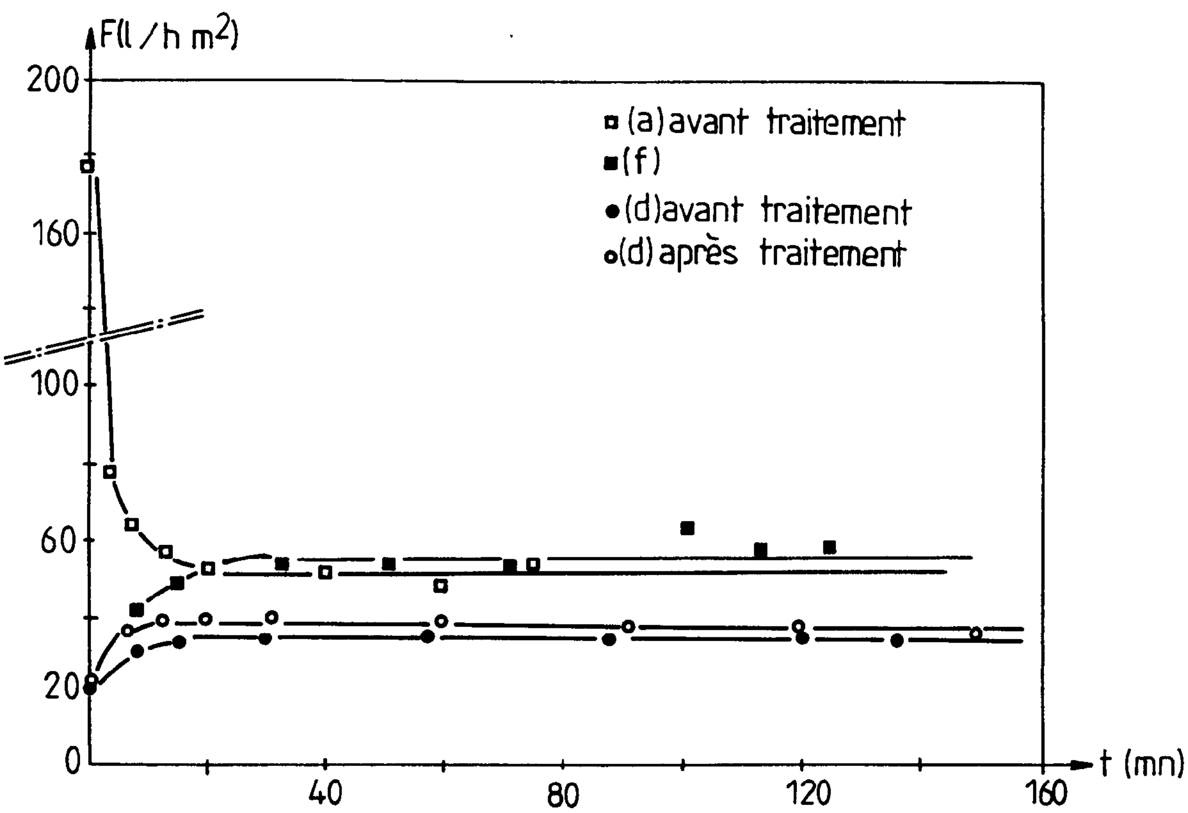
F(l/h m2)
200
160
100
60
20
0
40
80
120
160
t (mn)
(a)avant traitement
(f)
(d)avant traitement
(d)après traitement

FIG. 7

Office européen des brevets

# RAPPORT DE RECHERCHE EUROPEENNE

Numero de la demande

EP 92 40 1141
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | PROC FIRST INTERN CONF INORGANIC MEMBRANES '89 Montpellier(Fr) 3-6 juillet 1989 p. 55-64. 1990 C. GUIZARD et. al. : A new generation of membranes based on organic-inorganic polymers<br>* abrégé; figures 1,4 *<br>* page 55, ligne 22 - page 56, ligne 16 *<br>* page 57, ligne 1 - ligne 11 *<br>* page 58, ligne 6 - ligne 17 *<br>* page 59, alinéa 1 *<br>* page 61, ligne 1 - ligne 21 *<br>* page 62, ligne 8 - page 64, ligne 10 * | 1,2,5,7 | B01D71/72<br>B01D69/10<br>B01D69/12<br>C08G79/02 |
| A | | 3,6 | |
| Y | EP-A-0 288 380 (COMM A L'ENERGIE ATOMIQUE)<br>* abrégé; revendications 1-5 *<br>* colonne 2, ligne 3 - ligne 27 *<br>* colonne 3, ligne 55 - colonne 4, ligne 21 * | 1,2,5,7 | |
| D,A | US-A-4 749 489 (ALLEN)<br>* abrégé; revendications 1,3 *<br>* colonne 4, ligne 33 - ligne 42 *<br>* exemple 8 * | 1-5,7 | **DOMAINES TECHNIQUES RECHERCHES (Int. Cl.5 )** |
| A | FR-A-2 542 211 (NIPPON OIL COMP LTD)<br>* abrégé; revendications 1-5,10-17 *<br>* page 12, ligne 9 - ligne 12 *<br>* page 16, ligne 14 - page 17, ligne 14 *<br>* exemples 2,4 * | 1,2 | B01D<br>C08G |
| A | EP-A-0 175 668 (MONSANTO COMP)<br>* abrégé; revendications 1,3 *<br>* page 8, ligne 32 - ligne 34 *<br>* exemple 12 * | 1,2 | |
| A | EP-A-0 266 204 (KINGSTON TECHNOLOGIES LTD)<br>* abrégé *<br>* page 6, ligne 25 - ligne 30 * | 8 | |

-/--

Le présent rapport a été établi pour toutes les revendications

| Lieu de la recherche | Date d'achèvement de la recherche | Examinateur |
|---|---|---|
| LA HAYE | 11 AOUT 1992 | HOORNAERT P.G.R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 92 40 1141
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WO-A-8 806 477 (TECH-SEP)<br>* abrégé; revendications 1,6,7 *<br>* page 5, ligne 18 - ligne 24 *<br>* exemple 1 * | 1,2 | |
| D | & EP-A-0 302 928<br>--- | | |
| D,A | EP-A-0 250 327 (COMM A L'ENERGIE ATOMIQUE)<br>* abrégé; revendications 1-12 *<br>--- | 1,2,7 | |
| P,X | US-A-5 066 398 (SORIA) 19 Novembre 1991<br>* abrégé; revendications 1-4; exemple 5 *<br>* colonne 1, ligne 7 - ligne 19 * | 1,2,7,8 | |
| E | & EP-A-0 496 328 (SOC. DES CERAMIQUES TECHNIQUES ) 29 Juillet 1992<br>----- | | |

DOMAINES TECHNIQUES RECHERCHES (Int. Cl.5 )

Le présent rapport a été établi pour toutes les revendications

| Lieu de la recherche | Date d'achèvement de la recherche | Examinateur |
|---|---|---|
| LA HAYE | 11 AOUT 1992 | HOORNAERT P.G.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)